# EUROPÄISCHE PATENTSCHRIFT

(11) **EP 0 691 245 B1**
(45) Veröffentlichungstag und Bekanntmachung des Hinweises auf die Patenterteilung: **02.09.1998**
(21) Anmeldenummer: 95109616.3
(22) Anmeldetag: 21.06.1995
(51) Int. Cl.: B60R 21/20

(54) **Fahrzeuglenkrad für die Bestückung mit einem integrierten Gassack-Rückhaltesystem**
Vehicle steering wheel for insertion of an integrated air bag restraint system
Volant de véhicule pour l'implantation d'un système intégré de retenue par sac gonflable

(30) Priorität: 07.07.1994 DE 4423963
(43) Veröffentlichungstag der Anmeldung: 10.01.1996
(73) Patentinhaber: TRW Occupant Restraint Systems GmbH & Co. KG, 73551 Alfdorf (DE)
(72) Erfinder: Föhl, Arthur, D-73614 Schorndorf (DE)
(74) Vertreter: Degwert, Hartmut, Dipl.-Phys.

(56) Entgegenhaltungen:
- WO-A-95/09745
- DE-A- 3 126 079
- GB-A- 2 192 841
- GB-A- 2 282 352

## Beschreibung

Die Erfindung betrifft ein Fahrzeuglenkrad für die Bestückung mit einem integrierten Gassack-Rückhaltesystem.

Ein Fahrzeuglenkrad besteht üblicherweise aus einem metallischen Lenkradkörper, der auch als Lenkradskelett bezeichnet wird, und einer den Lenkradkörper ganz oder teilweise umgebenden Schicht aus geschäumtem Kunststoff. An dem zentralen Nabenteil des Fahrzeuglenkrades ist der Lenkradkranz über mehrere, meistens drei, Speichen angeschlossen. Der Nabenteil ist mit einem axialen Durchgangsloch für das Ende der Lenkwelle versehen. Die Befestigung an der Lenkwelle erfolgt mittels einer auf deren Ende aufgeschraubten Schraubmutter. Nach der Befestigung des Fahrzeuglenkrades an der Lenkwelle wird ein kompletter Gassack-Modul mit zusammengefaltetem Gassack und Gasgenerator in den hohlen Nabenteil eingesetzt.

Schließlich wird noch eine Abdeckung für den Gassack-Modul aufgesetzt.

Durch die Erfindung wird ein Fahrzeuglenkrad zur Verfügung gestellt, dessen Herstellung und Montage wesentlich vereinfacht sind. Das erfindungsgemäße Fahrzeuglenkrad enthält einen kunststoffumschäumten Lenkradkörper, dessen Nabenteil zur Aufnahme eines zusammengefalteten Gassacks ausgebildet ist, und eine Abdeckung für den Gassack. Die Abdeckung ist ein fester Bestandteil der Kunststoffumschäumung des Lenkradkörpers; der Nabenteil weist einen ausgesparten Boden auf, in dessen Öffnung ein Gehäusekörper einsetzbar ist, welcher eine Druckgasquelle beinhaltet und einerseits am Nabenteil sowie andererseits an einer Lenkwelle befestigbar ist. Der Gehäusekörper ist mit einer innenseitig keilverzahnten Buchse zur Befestigung am außenseitig entsprechend keilverzahnten Ende der Lenkwelle versehen. Durch diese Ausbildung des Fahrzeuglenkrades entfällt die gesonderte Herstellung und Montage der Abdeckung. Das Fahrzeuglenkrad mit integriertem Gassack-Rückhaltesystem kann als fertige Baugruppe angeliefert werden. Die Befestigung am Ende der Lenkwelle erfolgt über den Gehäusekörper. Dieser weist zu diesem Zweck eine innenseitig keilverzahnte Buchse zur Befestigung am außenseitig entsprechend keilverzahnten Ende der Lenkwelle auf. Diese Buchse wird dann quer zu ihrer Achse auf dem Ende der Lenkwelle festgespannt. Es ist aber auch eine herkömmliche Befestigung mittels einer auf das Ende der Lenkwelle aufgeschraubten Schraubmutter möglich. In diesem Falle ist der Boden der Buchse mit einer Bohrung für den Durchgang des Endes der Lenkwelle versehen, und der Gehäusekörper weist einen axialen Durchgang für ein Montagewerkzeug auf. Eine entsprechende Öffnung ist dann auch in der Abdeckung vorzusehen. Diese kann nach erfolgter Montage durch einen Stopfen verschlossen werden.

Die zum Stand der Technik gemäß Art. 54 (3) EPÜ gehörende WO-A-95/09745 zeigt bereits ein Fahrzeuglenkrad für die Bestückung mit einem integrierten Gassack-Rückhaltesystem, das die folgenden Bestandteile aufweist: einen kunststoffumschäumten Lenkradkörper, dessen Nabenteil zur Aufnahme eines zusammengefalteten Gassacks ausgebildet ist, und eine Abdeckung für den Gassack, wobei die Abdeckung ein fester Bestandteil der Kunststoffumschäumung des Lenkradkörpers ist und der Nabenteil einen ausgesparten Boden aufweist, in dessen Öffnung ein Gehäusekörper einsetzbar ist, welcher eine Druckgasquelle beinhaltet und einerseits am Nabenteil sowie andererseits an einer Lenkwelle befestigbar ist.

Weitere Merkmale und Vorteile der Erfindung ergeben sich aus der folgenden Beschreibung und aus der Zeichnung, auf die Bezug genommen wird. In der Zeichnung zeigen:

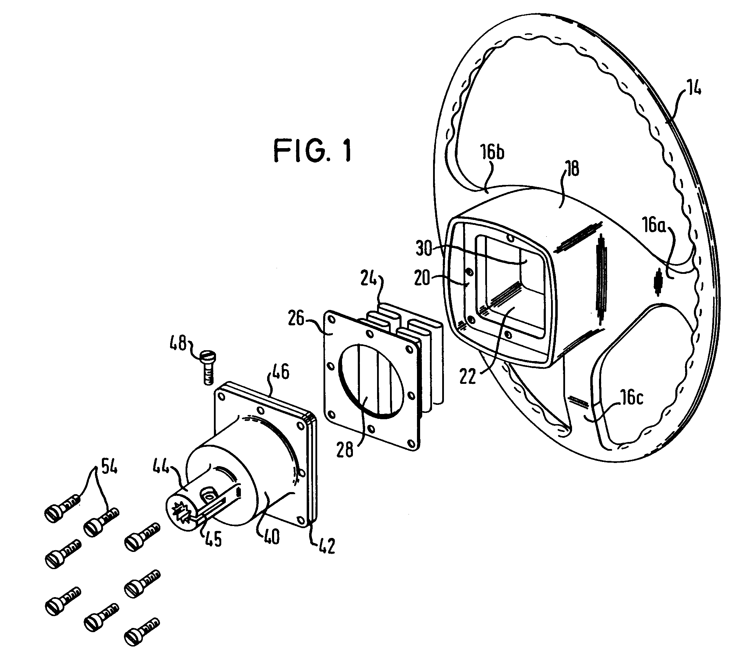

- Fig. 1 eine Explosionsansicht einer bevorzugten Ausführungsform des Fahrzeuglenkrades;

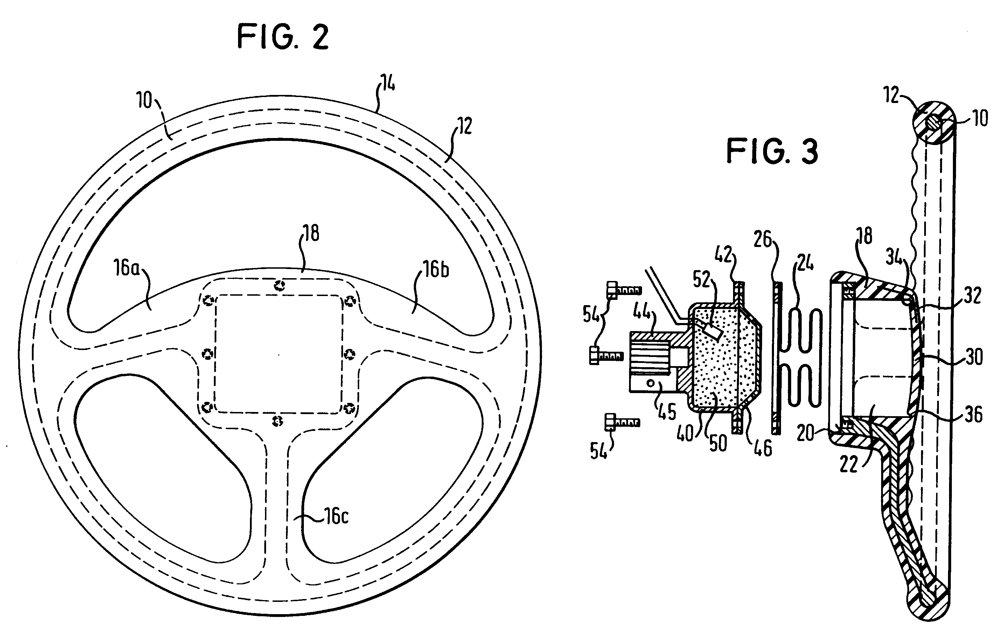

- Fig. 2 eine Draufsicht auf das Fahrzeuglenkrad von vorn;
- Fig. 3 eine im Schnitt gezeigte Explosionsansicht des Fahrzeuglenkrades.

Das Fahrzeuglenkrad weist in üblicher Weise einen metallischen Lenkradkörper 10 auf, der vollständig in eine Kunststoffumschäumung 12 eingehüllt ist. Der Lenkradkranz 14 ist über drei Speichen 16a, 16b und 16c mit einem zentralen Nabenteil 18 verbunden. Der Nabenteil 18 weist einen ausgesparten Boden auf, dessen Öffnung von einer ringförmigen, eingesenkten Anschlagfläche 20 berandet ist. Bei der gezeigten Ausführungsform ist der Nabenteil 18 im Querschnitt allgemein rechteckförmig, so daß auch die Anschlagfläche 20 entsprechend rechteckförmig ist.

Im Inneren des Nabenteils 18 ist ein Aufnahmeraum 22 für einen gefalteten Gassack 24 gebildet. Der Gassack 24 ist mit einem Befestigungsring 26 versehen, der die Berandung seiner Einblasöffnung 28 bildet und an die Form der Anschlagfläche 20 angepaßt ist. Auf der Vorderseite des Fahrzeuglenkrades ist der Aufnahmeraum 22 durch eine einteilig mit der Kunststoffumschäumung 12 ausgebildete Abdeckung 30 verschlossen. Diese Abdeckung 30 ist in üblicher Weise mit eingelegten Armierungen 32 versehen, die sich über einen Scharnierbereich 34 hinaus bis über den Nabenteil 18 erstrecken. Eine Aufreißlinie 36 ist durch eine innenseitige Kerbe am Rand der Abdeckung 30 gebildet.

Der offene Boden des Nabenteils 18 ist durch einen gesonderten Gehäusekörper 40 verschließbar, der aus einem zylindrischen Hauptteil und einem an die Form der Anschlagfläche 20 angepaßten Befestigungsflansch 42 sowie einer an den Boden des zylinderförmigen Hauptteils anschließenden Buchse 44 besteht. Auf den Flansch 42 ist ein Deckel 46 aufgesetzt, der mit Gasdurchtrittsöffnungen versehen ist. Die Buchse 44 weist innenseitig eine Keilverzahnung auf, die der Keilverzahnung am Ende einer Lenkwelle entspricht. Ferner ist die Buchse 44 mit einem axialen Schlitz 45 versehen, so daß die Buchse 44 quer zu ihrer Achse auf dem Ende der Lenkwelle mittels einer Spannschraube 48 festgespannt werden kann.

Der Gehäusekörper 40 nimmt im Inneren eine pyrotechnische Treibladung 50 auf. Ferner ist in dem Gehäusekörper 40 ein elektrischer Zünder 52 angeordnet. Somit bildet der Gehäusekörper 40 einen pyrotechnischen Gasgenerator.

Beim Zusammenbau des Fahrzeuglenkrades wird der gefaltete Gassack 24 mit seinem Befestigungsring 26 axial gegen die Anschlagfläche 20 des Nabenteils 18 geführt. Ebenfalls in Axialrichtung wird dann der Gehäusekörper 40 mit der Flanschfläche am Deckel 46 in Anlage an den Befestigungsring 26 gebracht. Mittels mehrerer durch den Befestigungsflansch 42, den Deckel 46 und den Befestigungsring 26 geführter Befestigungsschrauben 54 wird dann der Gehäusekörper 40 starr am Nabenteil 18 befestigt, welches zu diesem Zweck mit geeigneten Gewindebohrungen versehen ist. Das Fahrzeuglenkrad mit integriertem Gassack-Rückhaltesystem ist nun zur Montage am Ende der Lenkwelle bereit.

## Patentansprüche

1. Fahrzeuglenkrad für die Bestückung mit einem integrierten Gassack-Rückhaltesystem, mit einem kunststoffumschäumten Lenkradkörper (10), dessen Nabenteil (18) zur Aufnahme eines zusammengefalteten Gassacks (24; 24a) ausgebildet ist, und mit einer Abdeckung (30, 30a) für den Gassack, wobei die Abdeckung (30, 30a) ein fester Bestandteil der Kunststoffumschäumung (14) des Lenkradkörpers ist und der Nabenteil (18) einen ausgesparten Boden aufweist, in dessen Öffnung ein Gehäusekörper (40; 40a) einsetzbar ist, welcher eine Druckgasquelle beinhaltet und einerseits am Nabenteil (18) sowie andererseits an einer Lenkwelle (60) befestigbar ist, und wobei der Gehäusekörper (40; 40a) mit einer innenseitig keilverzahnten Buchse (44; 44a) zur Befestigung am außenseitig entsprechend keilverzahnten Ende der Lenkwelle (60) versehen und die Buchse (40) quer zu ihrer Achse auf dem Ende der Lenkwelle festspannbar ist.

2. Fahrzeuglenkrad nach Anspruch 1, dadurch gekennzeichnet, daß der Gehäusekörper (40) einen Befestigungsflansch (42) aufweist, der in die Öffnung am Boden des Nabenteils (18) einsetzbar ist.

3. Fahrzeuglenkrad nach Anspruch 2, dadurch gekennzeichnet, daß der Gehäusekörper (40) einen auf den Befestigungsflansch (42) aufgesetzten, mit Gasdurchtrittsöffnungen versehenen Deckel (46) aufweist.

4. Fahrzeuglenkrad nach Anspruch 3, dadurch gekennzeichnet, daß zwischen dem Deckelrand und einer gegenüberliegenden Anschlagfläche (20) am Boden des Nabenteils (18) ein die Einblasöffnung des Gassacks (24) berandender Befestigungsring (26) einspannbar ist.

## Claims

1. A vehicle steering wheel adapted to be fitted with an integrated gas bag restraining system, comprising a steering wheel body (10) encased in plastic foam and whose hub part (18) is designed to receive a folded gas bag (24; 24a), and a cover (30, 30a) for the gas bag, the cover (30, 30a) being an integral component of the plastic foam casing (14) of the steering wheel body and the hub part (18) having a recessed bottom in whose opening a housing body (40; 40a) is able to be inserted which contains a compressed gas source and on one side is able to be attached to the hub part (18) and on the other side to a steering shaft (60), the housing body (40; 40a) being provided with an internally splined bushing (44; 44a) for the attachment on the correspondingly externally splined end of the steering shaft (60), and the bushing (40) being adapted to be clamped transversely to its axis onto the end of the steering shaft.

2. The vehicle steering wheel as claimed in claim 1, characterized in that the housing body (40) possesses an attachment flange (42) which is adapted to be inserted into the opening in the bottom of the hub part (18).

3. The vehicle steering wheel as claimed in claim 2, characterized in that the housing body (40) possesses a lid (46) provided with gas passage openings and mounted on the attachment flange (42).

4. The vehicle steering wheel as claimed in claim 3, characterized in that between the edge of the lid and an oppositely located abutment surface (20) on the bottom of the hub part (18) an attachment ring (26) is able to be clamped which constitutes a rim to the inflation opening of the gas bag (24).

## Revendications

1. Volant de direction de véhicule destiné à être garni d'un système de retenue intégré à coussin à gaz, avec un corps (10) entouré de mousse en matière plastique, corps dont le moyeu (18) est constitué de façon à recevoir un coussin à gaz replié (24;24a), et avec un couvercle (30,30a) pour le coussin à gaz, le couvercle (30,30a) étant un composant fixe de l'entourage en mousse plastique (14) du corps du volant de direction et le moyeu (18) présentant un fond évidé, dans l'ouverture duquel on peut insérer un corps de boîtier (40;40a) qui contient une source de gaz comprimé et peut être fixé d'une part sur le moyeu (18) et d'autre part sur un arbre de direction (60), et le corps de boîtier (40;40a) étant pourvu d'une douille (44;44a) munie d'une denture de clavetage du côté intérieur qui sert à la fixer sur l'extrémité de l'arbre de direction (60) qui est munie d'une denture de clavetage correspondante du côté extérieur et la douille (40) pouvant être serrée perpendiculairement à son axe à l'extrémité de l'arbre de direction.

2. Volant de direction de véhicule selon la revendication 1, caractérisé en ce que le corps de boîtier (40) présente une bride de fixation (42), qui peut être insérée dans l'ouverture au fond du moyeu (18).

3. Volant de direction de véhicule selon la revendication 2, caractérisé en ce que le corps de boîtier (40) présente un couvercle (46) posé sur la bride de fixation (42) et pourvu d'ouvertures pour le passage de gaz destiné au coussin.

4. Volant de direction de véhicule selon la revendication 3, caractérisé en ce qu'entre le bord du couvercle et une surface de butée opposée (20) sur le fond du moyeu (18) on peut serrer une bague de fixation (26), qui borde l'ouverture de gonflage du coussin à gaz (24).
